# EUROPEAN PATENT SPECIFICATION

(11) **EP 4 198 462 B1**
(45) Date of publication and mention of the grant of the patent: **15.10.2025**
(21) Application number: 21215135.1
(22) Date of filing: 16.12.2021
(51) Int. Cl.: C02F 1/00, G01F 3/00, G01F 13/00, G01F 15/00, G01F 9/00, C02F 1/28, C02F 1/42

(54) **METHOD AND SYSTEM FOR ADJUSTING A DETERMINATION OF A VALUE OF A MEASURE BASED ON A VOLUME OF LIQUID PASSED THROUGH A DEVICE FOR HANDLING A LIQUID, LIQUID PROCESSING SYSTEM AND COMPUTER PROGRAM**
VERFAHREN UND SYSTEM ZUR EINSTELLUNG DER BESTIMMUNG EINES WERTS EINER MASSNAHME BASIEREND AUF EINEM FLÜSSIGKEITSVOLUMEN, DAS DURCH EINE FLÜSSIGKEITSHANDHABUNGSVORRICHTUNG GELEITET WURDE, FLÜSSIGKEITSVERARBEITUNGSSYSTEM UND COMPUTERPROGRAMM
PROCÉDÉ ET SYSTÈME DE RÉGLAGE D'UNE DÉTERMINATION D'UNE VALEUR DE MESURE SUR LA BASE D'UN VOLUME DE LIQUIDE PASSÉ À TRAVERS UN DISPOSITIF DE MANIPULATION DE LIQUIDE, SYSTÈME DE TRAITEMENT DE LIQUIDE ET PROGRAMME INFORMATIQUE

(43) Date of publication of application: 21.06.2023
(73) Proprietor: BRITA SE, 65232 Taunusstein (DE)
(72) Inventor: HAGEN, Thomas, 55122 Mainz (DE); BUBINGER, Michael, 65191 Wiesbaden (DE)

(56) References cited:
- EP-A1- 2 952 481
- EP-A1- 2 960 210
- US-A1- 2008 071 424
- US-B1- 10 969 262

## Description

The invention relates to a method of adjusting a determination of a value of a measure based on a volume of liquid passed through a device for handling a liquid.

The invention also relates to a system for effecting an adjustment of a determination of a measure based on a volume of liquid passed through a device for handling a liquid.

The invention also relates to a liquid processing system.

The invention also relates to a computer program.

US 2008/0071424 A1 discloses a positional flow sensing apparatus. A local controller is operatively coupled to a flow detector analogue positional sensor for determining when pouring is not occurring, when a pouring event is in progress and the flow control valve positional information. The output of the position sensor is periodically sampled by using a timer and detected by the local controller. The local controller is operatively coupled to a communication unit to convey the positional information to a tap hub module using a communication master unit. The communication mast unit and/or the tap hub module thereof communicates with a personal computing device to receive and display information for viewing by a user. The personal computing device is arranged to determine the volume of fluid dispensed when a pouring event occurs. Along with the position of the fluid control valve, the method used to determine the instantaneous rate of flow of the fluid from the valve takes into account how much fluid was dispensed during a previous pouring event and the time elapsed since the last pouring event. The duration of the current pour is also taken into consideration when calculating the instantaneous flow rate that is used to determine the total volume of the current pouring event. The following steps are used to determine the instantaneous flow rate during a pouring event:
1) Calculate the initial instantaneous flow rate for the pouring event, based upon physical system characteristics.
2) Adjust the initial instantaneous flow rate based upon the volume and duration of the previous pouring event, the time elapsed since the previous pouring event, the volume of liquid remaining the fluid dispensing vessel, and the sensed position of the fluid control valve.
3) As the current pouring event progresses, adjust the calculated instantaneous flow rate, based upon the sensed position of the fluid dispensing valve, the duration thus far of the current pouring event, and the volume dispensed thus far during the current pouring event.

The volume poured during each fluid control valve positioning sensing period is determined by multiplying the instantaneous flow rate at the time of the sample by the length of the sample period. The volume poured during a pouring event is determined by summing the volume poured during each sample period of the pouring event.

US 2008/0133150 A1 discloses a system for monitoring liquid consumption at an establishment. The system comprises a plurality of devices, each device physically coupled to a liquid container. In the embodiment described, the system includes spouts that are each configured to attach to an opening of a liquid container. Each spout includes a transmitter and a measuring apparatus. The measuring apparatuses generate raw data relating to the amount of dispensed liquid. A data processing server converts the raw data to the actual amount of dispensed liquid. The spout includes a fluid-flow passageway and a printed circuit board (PCB). The PCB includes a transmitter and the measuring apparatus. The measuring apparatus includes a tilt switch. The measuring apparatus generates a pour signal whenever a micro-controller detects that the tilt switch has generated an active signal for more than a predetermined amount of time. Each time the tilt switch closes, the tilt-switch signal is active and combinatorial logic generates an interrupt signal that the micro-controller receives. When the micro-controller notices the interrupt signal, it uses a time-measuring algorithm to detect whether the tilt-switch signal remains active for more than the pre-determined amount and, if so, to measure the duration of the active period. In some embodiments, the micro-controller measures the active-period duration by measuring several time intervals and summing the measured time intervals. The illustrated time-measurement process generates the pouring-interval signal by adding a time period representing a pour-initiation period and a second time period. The second time period is a full-pour period during which fluid freely pours through the spout's passageway. Other embodiments generate this amount by measuring several time intervals, weighting the measured time intervals and summing the weighted time intervals.

This system may yield accurate results where the flow rate during pouring is always at a maximum. If the liquid is poured from a jug or carafe or dispensed from a tap, the maximum rate of flow will vary according to the extent to which the user tilts the jug or carafe or opens the tap. This will vary according to the type of vessel the user is in the process of filling. If that vessel is small or has a narrow fill opening, the user will proceed more cautiously to avoid splashing.

A known system for measuring an amount of liquid poured from a jug-type water filtration system allows a user to set the size of vessel typically filled from the jug by that user. The system times each pour event and multiplies this with a factor of which the value depends on the set typical vessel size. However, the accuracy of the determined filtered water volume depends on the correct setting by a user, and it is unclear which setting is to be selected in case of a range of expected use scenario's. Such a range is to be expected in household settings, where typically a range of different types of vessels are filled.

EP 2 960 210 A1 relates to a method for evaluating a volume of liquid made to flow through a flowing section of a liquid container.

It is an object of the invention to provide a method, system, liquid processing system and computer program that allow for relative accurate tracking of the volume of liquid that has passed through a liquid handling device into which or from which a user can pour liquid when the user may need to pour a large or small volume of liquid at a time in dependence on circumstances, in particular in dependence on at least one dimension of the vessels to be filled.

This object is achieved according to a first aspect by the method according to the invention, which comprises:
obtaining a set of respective durations of flow events from a measurement system comprising a sensor arranged to distinguish between a state of liquid flowing through a flow-conducting part of the liquid handling device and a state of non-flow,
wherein the measurement system is arranged to determine the durations of at least qualifying flow events on the basis of a signal from the sensor;
determining respective values of a parameter for at least two duration values derived from the set of durations using a non-linear relation between the parameter and the duration of a flow event;
deriving at least one value of a variable from the determined values of the parameter; and
making available the derived variable value(s) as input to a totalisation operation comprising;
   (i) determining a respective value of a volume-based measure for each of a sequence of at least qualifying flow events, wherein each determination is based on at least one of the derived variable value(s) made available as input;
   (ii) determining a total value that is a linear combination of the determined values of the volume-based measure; and
   (iii) providing an output based on the total value.

A flow event lasts from a detected transition from a state of non-flow to a state of flow until a detected transition from the state of flow back to a state of non-flow. The detected transitions as derived from the signal from the sensor are decisive. In reality, there may be some minimal flow outside the detected time interval during which the flow event is determined to be taking place. The sensor signal may distinguish only between states of flow and states of non-flow, so that the physical rate of flow is not derivable from only the signal. The method therefore does not rely on a measurement system with a sensor for measuring the rate of flow.

The flow-conducting part may be at an inlet or an outlet of the liquid handling device, for example. The liquid handling device may be comprised in a liquid processing system or just a system that does not influence the physical or chemical properties of the liquid. Thus, it may be a simple dispensing device. Use of the liquid handling device in the course of a qualifying flow event entails filling a vessel with the liquid, e.g. under the control of a user. The vessel may be internal or external to the liquid handling device.

Because the method comprises determining respective values of a parameter for at least two duration values derived from the set of durations, the method is suitable for capturing behaviour of a user. The parameter may be volume-related, e.g. representative of an average volumetric flow rate over a flow event or representative of a volume. The parameter value does not need to have a physical meaning. This means that the parameter value may be quantified in units that have meaning only in the context of the implementation of the method (for example a value on a scale of zero to one, where one corresponds to the full volume of a reservoir). Because the relation is non-linear, the more duration values that are used, the larger the distinction that can be made between different user behaviours. The relation to be used may be selected from amongst several relations on the basis of characteristics of at least one of a user, conditions of use and a component of the liquid handling device. These characteristics may be obtained on the basis of user input, for example. Characteristics include user gender, geographical location, age of the user, time of year, the size of a reservoir from which the liquid passing through the flow-conducting part originates, etc.

The variable of which at least one value is derived may be the same as the parameter, in which case, the step of deriving at least one value of a variable from the determined values of the parameter need not entail any mathematical operations. In other embodiments, a sub-set of the parameter values is selected as the at least one value of the variable. It follows that the variable may correspond to volume or volumetric flow rate. Alternatively, the variable may correspond to treatment capacity of a liquid treatment system or rate of use of treatment capacity. Thus, the variable is volume-based, but not necessarily representative of either volume or volumetric flow rate.

The entity carrying out the steps of the method may, but need not, carry out the totalisation operation itself, but may make the derived variable value(s) available to another entity that is arranged to carry out the totalisation operation. In the latter case, making available the derived variable value(s) as input to a totalisation operation may be subject to receiving a confirmation command from a user upon causing the derived variable value(s) to be displayed to the user.

In the totalisation operation, the derived variable value(s), which captured user behaviour as just explained, are used to determine a total value that is based on only durations of flow events. The volume-based measure determined in the totalisation operation may correspond to volume or another volume-based measure (e.g. capacity of a liquid treatment medium in a liquid treatment system or amount of substance dissolved in liquid). Depending on what the volume-based measure is, the linear combination may be a summation or subtraction. The factors in the linear combination need not be constant. The output based on the total value may be a data item for use by a data processing system or a signal to an output device for providing a perceptible output. The output may be based on the total value in the sense that it results from a comparison of the total value with certain threshold values, e.g. how soon a replenishment or maintenance operation is to be performed.

The sequence of at least qualifying flow events on which the totalisation operation is based may be the flow events for which the set of durations is obtained or only subsequent flow events. That is to say that the adaptation may affect only totalisation operations based on future flow events or also affect a totalisation operation based on past flow events.

In an embodiment of the method, qualifying flow events are flow events having a duration above a pre-determined minimum value, and the method comprises at least one of obtaining a set of respective durations of only qualifying events and removing durations of non-qualifying events from the set obtained from the measurement system.

The entity carrying out the method may thus receive respective durations of only qualifying flow events from a measurement system arranged to sort out durations of non-qualifying flow events, or the entity may effect the sorting itself. Because the method works on the basis of flow events as detected on the basis of the sensor signal, false positives are discarded. Furthermore, events that are not typical of the filling or emptying of vessels are not taken into account. Examples include quick rinses or the like.

In an embodiment of the method, qualifying events are flow events having a duration below a pre-determined maximum value, and the method comprises at least one of obtaining a set of respective durations of only qualifying events and removing durations of non-qualifying events from the set obtained from the measurement system.

Again, the entity carrying out the method may receive respective durations of only qualifying flow events from a measurement system arranged to sort out durations of non-qualifying flow events, or the entity may effect the sorting itself. Because the method works on the basis of flow events as detected on the basis of the sensor signal, false positives are discarded. These include other types of events in the liquid handling system, in particular incorrect operations. Examples include the knocking over of a container by a user, leaving a tap open, etc. Other types of uses, e.g. a use of a tap to fill a central heating circuit instead of a vessel are disregarded in the method. It follows that the relation on which the step of determining parameter values is based, need not be defined over a large range. Since this relation will generally be empirically derived and may be stored in the form of a lookup table, the effort involved in implementing the method is kept within bounds.

In an embodiment, the sensor is configured to provide a binary signal distinguishing only between a state of flow and a state of non-flow.

Because the method does not require more information, the sensor can be relatively simple. The amount of effort involved in implementing the method is also kept low. Calibration can, for example, be dispensed with or kept relatively simple.

In a variant of this embodiment, the sensor comprises a tilt sensor, e.g. a tilt switch, the measurement system comprises a support for mounting on a container and/or an operating part of a valve for controlling a flow of liquid through the flow-conducting part, and the sensor is mounted on the support.

This is a relatively simple way of distinguishing between a state of flow and a state of non-flow where a user's behaviour determines whether liquid flows or not.

In an embodiment of the method, a respective value of the parameter is obtained for each of a plurality of durations from the set, and the derived variable values made available as input correspond to the obtained parameter values.

In this embodiment, the parameter values may be representative of volumetric capacity (e.g. volume or volume-based treatment capacity). The totalisation operation comprises adding up the individual values, optionally multiplied by a conversion factor. This embodiment requires some effort to implement and is backward-looking, but relatively accurate. The embodiment can be implemented externally of the measurement system by another, computationally more powerful, system.

In an alternative embodiment of the method, a single derived variable value is made available as input, and the totalisation operation comprises:
(i) obtaining respective durations of the sequence of flow events; and
(ii) determining the respective values of the volume-based measure by multiplying the duration of the flow event concerned with the derived value made available as input.

In this embodiment, the derived variable value is representative of a rate of change of a volumetric capacity, e.g. volumetric flow rate, rate of use of treatment capacity, etc. The respective durations obtained in the first step (i) may be the same as those obtained at the start of the measurement. In other words, the step (i) of obtaining the respective durations need not follow chronologically the steps of determining respective values of a parameter and of deriving at least one value of a variable. Furthermore, the steps (i), (ii) may, and generally will, be carried out one duration value at a time. In that case, the single derived variable value is obtained, e.g. a rate of flow, and volumes are determined for each flow event in the sequence as it occurs. A running total is maintained of the volume-based measure.

In a particular example of this embodiment, deriving the variable value comprises determining an average of the determined parameter values, e.g. a weighted average.

Because the relation between the parameter value and the duration is non-linear, the parameter values should be averaged. Averaging durations and obtaining one value of the parameter would not accurately characterised usage of the liquid handling device.

In an embodiment, the at least two duration values derived from the set are obtained by performing a cluster analysis on the set of durations.

This means that fewer parameter values need be determined on the basis of the relation, e.g. by calculation or retrieval from a lookup table. Accuracy is not sacrificed appreciably, because the durations within each cluster will be close together.

In an example of an embodiment in which a single derived variable value is made available as input, and the totalisation operation comprises: (i) obtaining respective durations of the sequence of flow events; and (ii) determining the respective values of the volume-based measure by multiplying the duration of the flow event concerned with the derived value made available as input, wherein deriving the variable value comprises determining an average of the determined parameter values, e.g. a weighted average, and the at least two duration values derived from the set are obtained by performing a cluster analysis on the set of durations, the average is a weighted average, and weights for determining the weighted average are based on how many durations are in the clusters.

More frequent use scenarios are therefore given more weight.

In an embodiment of the method, the set of respective durations is obtained from a device comprising the measuring system via a communications network, e.g. a Personal Area Network.

The method can thus be carried out by a computationally more powerful device than the one implementing the measurement system. That more powerful device can be used in combination with multiple measurement systems and liquid handling devices. The measurement system need not be provided with the computational resources necessary to determine the parameter values from the durations. Furthermore, the non-linear relation between the parameter and the duration of a flow event can evolve as more insights are gained without the need arising to update a large number of devices, in particular devices installed to implement the measurement system. Moreover, the device implementing the measurement system can be battery-powered without the need for a battery with a large capacity or for frequent battery changes.

A Personal Area Network (PAN) is a computer network for interconnecting electronic devices within an individual person's workspace. A PAN may be wireless or wired. Suitable wireless PANs include those based on IrDA, Wireless USB, Bluetooth or ZigBee, for example. A Personal Area Network is relatively simple to set up, e.g. on an ad hoc basis. However, this embodiment can also be implemented using a local area network, e.g. a wireless local area network.

In an embodiment of the method, making available the derived variable value(s) comprises transferring data representative of the derived variable value(s) over a communication network, e.g. a Personal Area Network, to a computer system arranged to perform the totalisation operation.

The computer system need not be a digital computer system and may in particular be a computer system implementing the measurement system. In this embodiment, the device carrying out the method need only be available for a short period of time and can then be used for other, unrelated, tasks.

In an example of an embodiment in which the set of respective durations is obtained from a device comprising the measuring system via a communications network, e.g. a Personal Area Network, and making available the derived variable value(s) comprises transferring data representative of the derived variable value(s) over a communication network, e.g. a Personal Area Network, to a computer system arranged to perform the totalisation operation, the device comprising the measuring system also comprises the computer system arranged to perform the totalisation operation.

This embodiment requires only one communication link, and generally only temporarily.

In an example of any embodiment in which the set of respective durations is obtained from a device comprising the measuring system via a communications network, e.g. a Personal Area Network, the computer system arranged to perform the totalisation operation comprises a server for communicating the output over a Wide Area Network, e.g. to a Mobile Station for a cellular telecommunications network.

The Wide Area Network may be the Internet. This embodiment is suitable for allowing users and/or manufacturers to monitor consumption of resources, for example. The computer system arranged to perform the totalisation operation may be a distributed computer system in this embodiment. In that case, one device may perform the computations and transfer the result or an intermediate result to the server, e.g. via a local network link. The server makes the output available for access over the Wide Area Network from any convenient location.

An embodiment of the method further comprises performing the totalisation operation.

In an example of such an embodiment, for use with a device for handling a liquid comprised in a liquid treatment system for altering a composition of liquid, the liquid treatment system comprises a liquid treatment medium having a finite treatment capacity, and determining a total value that is a linear combination of the determined values of the volume-based measure comprises multiplying the determined values of the volume-based measure with a value of a variable representative of a concentration of at least one component determining the composition of the liquid.

This embodiment is suitable for providing advance warning that the liquid treatment medium requires replacement or regeneration.

According to another aspect, the system according to the invention for effecting an adjustment of a determination of a measure based on a volume of liquid passed through a device for handling a liquid comprises:
at least an interface to a measurement system comprising a sensor arranged to distinguish between a state of liquid flowing through a flow-conducting part of the liquid handling device and a state of non-flow,
wherein the measurement system is arranged to determine the duration of at least qualifying flow events on the basis of a signal from the sensor; and
a data processing system configured to carry out a method according to the invention.

The system may be a general-purpose computing device that is suitably programmed. The interface may then simply be a standard communications interface for exchanging data with peripheral devices.

Thus, in an embodiment of the system, the interface comprises a network interface for communicating with a device comprising at least the measurement system over a communications network, e.g. a Personal Area Network.

An embodiment of the system comprises a network interface for communicating over a communications network the derived variable value(s) to a computing system arranged to perform the totalisation operation.

The system carrying out the method need not therefore be available permanently in order to perform the totalisation operation.

An embodiment of the system is arranged to carry out the totalisation operation, and arranged to communicate the output over a Wide Area Network, e.g. to a Mobile Station for a cellular telecommunications network.

The system of this embodiment may be a distributed system. In particular, the output may be communicated, in use, over a local network link to the server.

An embodiment of the system comprises a device comprising the measurement system.

In an example of this embodiment, the sensor is configured to provide a binary signal distinguishing only between a state of flow and a state of non-flow.

The sensor can thus be relatively unsophisticated and require minimal calibration.

In an example of any embodiment of the system comprising a device comprising the measurement system, wherein the sensor is configured to provide a binary signal distinguishing only between a state of flow and a state of non-flow, the sensor comprises a tilt sensor, e.g. a tilt switch, wherein the device comprising the measurement system comprises a support for mounting on a container and/or an operating part of a valve for controlling a flow of liquid through the flow-conducting part, and wherein the sensor is mounted on the support.

In this embodiment, the device comprising the measurement system is relatively easy to install. The sensor does not come into contact with the liquid and there is no need to mount the sensor inside a conduit. Leakage risks are minimal.

According to another aspect, the liquid processing system according to the invention comprises:
a measurement system comprising a sensor arranged to distinguish between a state of liquid flowing through a conduit of the liquid processing device and a state of non-flow,
wherein the measurement system is arranged to determine the duration of at least a qualifying flow event on the basis of a signal from the sensor; and
a system according to the invention for effecting an adjustment of a determination of a measure based on a volume of liquid passed through the conduit.

An embodiment of the liquid processing system comprises a liquid treatment system for altering a composition of the liquid.

In such systems, keeping accurate track of the amount of liquid that has been processed is relatively useful.

In an example of this embodiment, the liquid treatment system comprises a replaceable liquid treatment medium having a finite treatment capacity, e.g. wherein the replaceable liquid treatment medium is contained in a replaceable liquid treatment cartridge.

The total value calculated in the totalisation operation may be volume, used treatment capacity or remaining treatment capacity, for example. The output may be the total value or an output in a signalling scheme for alerting a user to a need to replace or regenerate the liquid treatment medium. The method is of use in such a system, because needlessly early replacement as well as under-treatment are avoided relatively reliably according to how use is made of the liquid processing system.

According to another aspect, the computer program according to the invention includes a set of instructions capable, when incorporated in a machine-readable medium, of causing a system according to the invention to carry out a method according to the invention.

Computer programs for present purposes includes native applications and web applications (i.e. software run through a browser).

The invention will be explained in further detail with reference to the accompanying drawings, in which:
- Fig. 1: is a schematic diagram showing the functional components of a system of keeping track of used treatment capacity of a liquid treatment system;
- Fig. 2: is a diagram of a first liquid treatment system comprising a system for keeping track of used treatment capacity;
- Fig. 3: is a detailed view of a sensor device in the system of Fig. 2;
- Fig. 4: is a diagram of a second liquid treatment system comprising a system for keeping track of used treatment capacity;
- Fig. 5: is a diagram showing a graph of the relation between an average flow rate and a duration of a flow event in a typical use scenario of the first or second liquid treatment system;
- Fig. 6: is a first state diagram showing states of a sensor device in the system of Fig. 1 during a process of keeping track of used treatment capacity;
- Fig. 7: is a second state diagram showing states of a device for providing perceptible output representative of the used capacity in the system of Fig. 1; and
- Fig. 8: is an action diagram of a method of adjusting a determination of a volume of liquid passed through the first or second liquid treatment system as carried out by a mobile computing device in the system of Fig. 1.

The following explanation will focus on systems for treating a liquid, on the understanding that it is equally applicable to other types of liquid handling system. An example would be a system for dispensing liquid. In the systems used here by way of example, the liquid is an aqueous liquid, e.g. tap water. The treatment is the removal of one or more dissolved substances, which may be organic or inorganic substances. Examples include the removal of chlorine from tap water or water softening, including reducing temporary or total hardness, e.g. by ion exchange. The liquid treatment medium used in such treatment generally comprises a sorbent, which for present purposes includes a medium for the treatment of liquid by ion exchange. Such media have a finite treatment capacity, which is used up at a rate dependent on the volume of treated liquid and the concentration of the contaminants to be removed from the liquid. To give a user adequate warning that the treatment capacity is about to exhausted, the used capacity is kept track of.

In the examples to be discussed in detail, the liquid treatment system is arranged to allow treated liquid to be dispensed into a vessel by a user. The volume of liquid dispensed corresponds to the volume of liquid that has been treated. Where the system comprises a blending device for blending the treated liquid with liquid left untreated, the volume of treated liquid is derivable from the volume of liquid dispensed with knowledge of the blending ratio, which may be measured or determined on the basis of a setting. Thus, in either case, determining the volume of liquid dispensed allows one to determine the volume of liquid that has been treated.

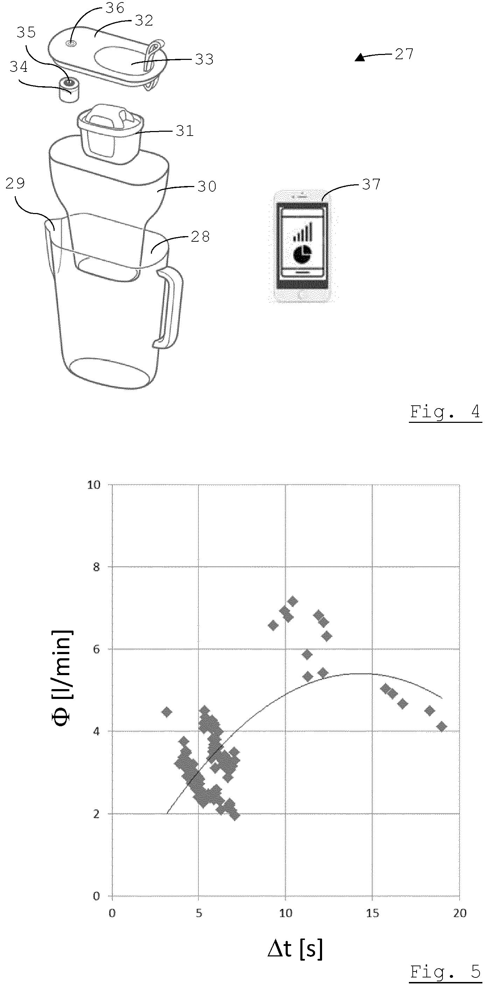

The volumetric rate of flow of the liquid dispensed is variable, according to how the user uses the liquid treatment system's dispensing functionality. It has been found that users typically fill small vessels carefully, so that an average rate of flow *Φ* during the dispense event is relatively low. As the size of the vessel increases, users will adapt their behaviour such that the average rate of flow *Φ* increases. The increase is not, however, proportional to the size of the vessel to be filled (otherwise every vessel would take the same time to fill). Using a panel of test persons and a range of vessel sizes, it is possible to fit a curve representative of the relation between a duration *Δt* of the dispense event and the average volumetric rate of flow *Φ* (Fig. 5). The relation can be captured in a lookup table or formula relating the duration *Δt* to the average volumetric rate of flow *Φ*. It has been found in tests that the vessel size (including the fill opening size) has the largest influence on the flow rate. By basing the relation on a range of vessels of different dimensions, the relation can yield relatively accurate results.

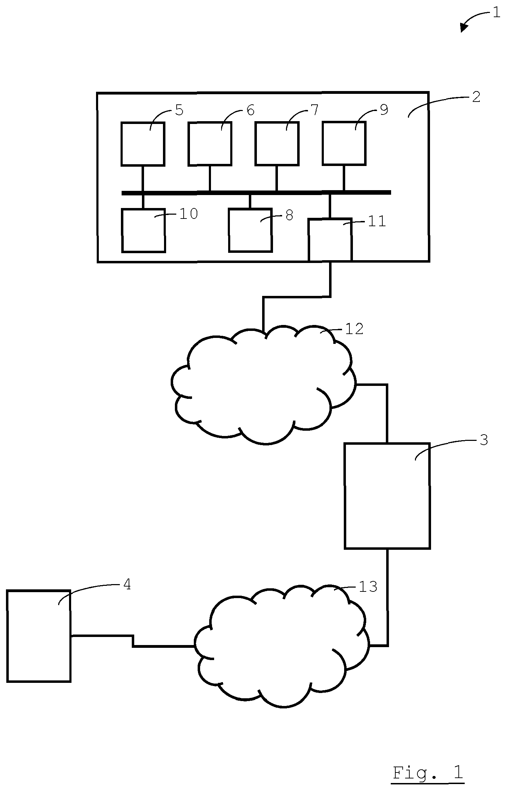

A monitoring system 1 (Fig. 1) for tracking use of the liquid treatment capacity comprises a local device 2, a mobile computing device 3 and a central computer system 4.

The local device 2 comprises a sensor 5 arranged to distinguish between a state in which liquid flows through a flow-conducting part of the liquid treatment system and a state of non-flow. The sensor 5 is arranged to provide a binary signal having values corresponding to the two states. The sensor 5 signal only permits to determine which of the states pertains at a particular time. The rate of flow is neither measured nor required.

The sensor 5 may comprise an electrode pair or pressure sensor arranged to respond to a presence or absence of liquid in a flow-conducting part of the liquid handling system in which the sensor 5 is arranged, for example. In an alternative embodiment, the flow of liquid drives a turbine wheel that is connected to a signal generator to signal that the speed of rotation has exceeded a certain threshold. In the examples to be described in detail below, the sensor 5 comprises a tilt sensor or tilt switch mounted on a support. The support may be mounted on a container or an operating part of a valve for controlling a flow of liquid through a flow-conducting part of the liquid handling system. A state of flow corresponds to the sensor 5 being tilted beyond a certain angle, for example. The tilt sensor may comprise an accelerometer transducer (single axis, two-axis or three-axis), vibrating wire transducer or an electrolytic transducer. Since only a binary signal is required, a tilt switch comprising a mercury switch or conducting ball switch suffices. The switch may be mounted on a printed circuit board, e.g. in a housing or on a frame of the local device 2.

The local device 2 comprises a data processing unit 6, a volatile memory unit 7 and a non-volatile memory unit 8. The local device 2 further comprises at least one user control 9, e.g. a button or switch, and at least one output device 10 for providing a perceptible output signal. The perceptible output signal may be a visible signal, a tactile signal, an audible signal or a combination thereof. In an embodiment, the output device 10 comprises a light-emitting module for emitting light in any of several colours for signalling whether and how urgently the liquid treatment medium in the liquid treatment system requires replacement or re-generation. In the following, the example of a traffic-light scheme will be used, i.e. green to signal that exhaustion of the liquid treatment capacity is not imminent, yellow to signal that the end of the useful lifetime of the liquid treatment medium is approaching and red to signal that the liquid treatment medium requires replacement or regeneration. Other schemes are possible. These include using intermittent light emission with the frequency indicating the current stage in the lifetime of the liquid treatment medium, or using a display module for displaying a number of bars or circle segments corresponding to the current stage in the lifetime of the liquid treatment medium or the remaining treatment capacity or lifetime.

The local device 2 further comprises a network interface 11 for connecting to a wireless network 12. The network interface 11 comprises a controller and wireless transceiver and is arranged to operate in accordance with a network standard. The wireless network 12 may be a Personal Area Network (PAN) and the standard may be any one of the Bluetooth standards, ZigBee or the like.

The mobile computing device 3 comprises a compatible network interface (not shown), so that the local device 2 and the mobile computing device 3 are able to exchange data.

The local device 2 will generally be battery-operated. The wireless network 12 may be set up on an ad hoc basis in response to an input via the user control 9, for example, with the mobile computing device 3 responding to a request to set up a connection, when in range.

The mobile computing device 3 is set up, e.g. by means of a dedicated software application, to allow settings of the local device 2 to be controlled and to process data obtained by the local device 2. In an embodiment, the software application allows this to be done for multiple local devices 2.

In the illustrated embodiment, the mobile computing device 3 is also set up to communicate with the central computer system 4 via a Wide Area Network (WAN) 13, e.g. the Internet. The central computer system 4 may be set up to administer a plurality of user accounts. These may be associated with users or mobile computing devices 3 or local devices 2, for example.

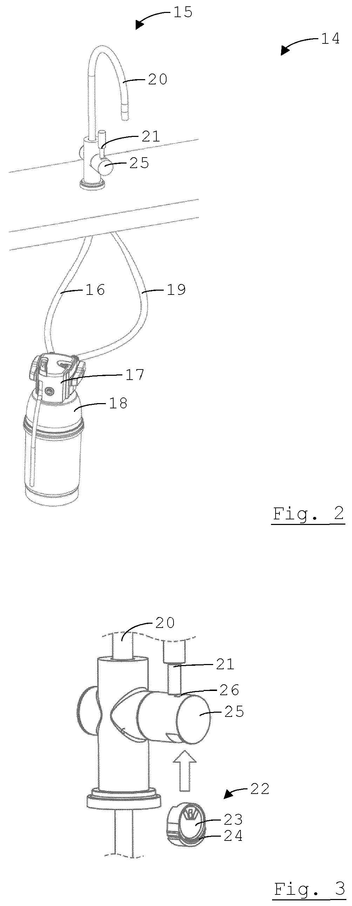

A first liquid treatment system 14 (Figs. 2 and 3) comprises a tap 15 connectable to a mains water supply and comprising a diverter for connection to a first conduit 16 for supplying the water to a head device 17. The head device 17 is arranged for connection to a replaceable liquid treatment cartridge 18. In the connected state, the water received through the first conduit 16 can pass into the liquid treatment cartridge 18 through at least one inlet port of the liquid treatment cartridge 18.

One or more liquid treatment media in the liquid treatment cartridge 18 may affect the composition of the water treated by that medium. Treatment may comprise elution or sorption, which for present purposes includes liquid treatment by ion exchange, e.g. water softening or reduction of temporary (carbonate) hardness. The media may comprise electroactive materials, adsorbents (e.g. activated carbon) or ion exchange resin (including cation exchange resins and anion exchange resins). In a particular example, the media include weakly acidic cation exchange resin that is at least partly in the hydrogen form.

The liquid treatment cartridge 18 may additionally comprise liquid treatment media for mechanical filtration, e.g. non-woven filtration media, a carbon block or a string-wound module. These also have a finite treatment capacity, because they can become clogged.

Treated water or a mixture of treated and untreated water is returned to the head device 17 through at least one outlet port of the liquid treatment cartridge 18. This water flows back to the tap 15 through a second conduit 19 for dispensing via a spout 20.

A valve (not shown) in the tap 15 controls the flow of water. The valve is operable by means of a lever 21 rotatable about an axis. In the illustrated embodiment, the axis is a generally horizontal axis. In other embodiments, the axis may be oriented differently. When the valve is opened, water flows through the first and second conduits 16,19 and the spout 20, and at least partly treated water is dispensed. When the valve is closed, there is no water flow. The rate of flow may vary according to the extent to which the valve is opened. This corresponds to the angle over which the lever 21 is rotated.

The first liquid treatment system 14 comprises a lifetime indicator (LTI) device 22. This LTI device 22 is an embodiment of the local device 2 described above with reference to the general monitoring system 1.

The LTI device 22 comprises a printed circuit board 23 on a support frame 24. The components of the local device 2 described above are mounted to one or both of the printed circuit board 23 and the support frame 24.

The LTI device 22 is insertable into a housing 25 formed at a base of the lever 21. When the lever 21 is rotated, the housing 25 is also rotated.

The sensor 5, when embodied as a tilt sensor or tilt switch, is mounted such that the sensor 5 is tilted when the lever 21 and the housing 25 are rotated. Thus, the sensor 5 is able to detect the closing and opening of the valve. In an alternative embodiment, the sensor 5 comprises a switch actuated by a stationary component on or in the tap 15 when the lever 21 is within a certain range of angular positions or in a particular angular position. The sensor 5 may, for example, provide a signal that changes between two values whenever the switch is closed as the lever 21 moves back and forth past a certain angular position.

The housing 25 comprises a window 26. The LTI device 22 comprises an output device 10 comprising a coloured light-emitting module (not shown) capable of emitting light in any of several colours for signalling whether and how urgently the liquid treatment cartridge 18 requires replacement. In the illustrated embodiment, the window 26 is a closed translucent window 26. In an alternative embodiment it may be an aperture through which a light guide comprised in the coloured light-emitting module is arranged to protrude.

The user control 9, or one of several of these, may be accessible only upon removal of the LTI device 22 from the housing 25 or may be accessible through a window in the housing 25, for example. Such a window may be a closed window across which a flexible cover extends, so that the user control 9 can be manipulated by pressing on the flexible cover.

A second liquid treatment system 27 (Fig. 4) for the treatment of an aqueous liquid, e.g. tap water, comprises a jug 28 for collecting treated liquid. The jug 28 has a spout 29 through which the treated liquid can be dispensed into a vessel. The liquid treatment system 27 is for domestic use, so that the size of the vessel to be filled will in typical use scenarios be below a certain maximum, e.g. the volume of a large cooking pot.

A funnel 30 is suspendable in the jug 28 and arranged to function as a reservoir for liquid to be treated. A replaceable liquid treatment cartridge 31 is arranged to be placed in a seat at the outlet of the funnel 30, such that liquid can only leave the funnel 30 by passing through the liquid treatment cartridge 31. A flow path of liquid through the liquid treatment cartridge 31 passes through a chamber containing at least one liquid treatment medium having a finite treatment capacity.

A lid 32 covers the jug 28 and funnel 30. The lid 32 is provide with a fill opening closable by a closure element 33. The closure element 33 can be opened, in the illustrated example pivoted, to open the fill opening.

In the illustrated embodiment, a lifetime indicator (LTI) device 34 is attachable to the lid 32.

The LTI device 34 is an embodiment of a local device 2 as described above in the context of the monitoring system 1. Thus, the LTI device 34 can comprise a tilt sensor, in particular a tilt switch mounted in a housing of the LTI device 34. When the jug 28 is tilted by more than a threshold angle from the vertical, the tilt switch will signal this as the start of a flow event. When the jug 28 is returned past a certain angle to the vertical into an upright position, the end of the flow event is detected. The tilt switch may be arranged to detect only tilting in a certain direction, e.g. within a plane through a central upright axis of the jug 28 and the spout 29 or within a plane deviating by not more than a certain angle from a plane through the central upright axis and the spout 29.

In an alternative embodiment, the LTI device 34 or a variant thereof is attached to the closure element 33 to detect the start and end of a flow event comprising an inflow of liquid to be treated into the second liquid treatment system 27. For a pivoting closure element 33 of the type shown, the sensor 5 can again be a tilt sensor or tilt switch. In the case of a sliding or liftable closure element 33, a different type of switch, electromechanical, optical or magnetic, for example, can be used.

The LTI device 34 comprises an output device 10 comprising a coloured light-emitting module 35 capable of emitting light in any of several colours for signalling whether and how urgently the liquid treatment cartridge 31 requires replacement. The coloured light-emitting module 35 comprises a light guide to allow the light to be emitted through a window 36 in the lid 32. In the illustrated embodiment, the window 36 is an aperture and the light guide protrudes through the aperture.

The LTI device 34 also comprises at least one user control comprising a button or switch allowing the LTI device 34 to be re-set on replacement of the liquid treatment cartridge 31. For example, a switch may detect detachment and reattachment of the LTI device 34 to the lid 32.

The LTI device 34 is arranged to communicate with a mobile computing device 37, which is an example of the mobile computing device 3 as described above. The LTI device 34 may comprise a further user control to initiate the establishment of a network connection with the mobile computing device 37. In an embodiment, the light guide protruding through the lid 32 can be pressed or pressed and held for a minimum time period to this end.

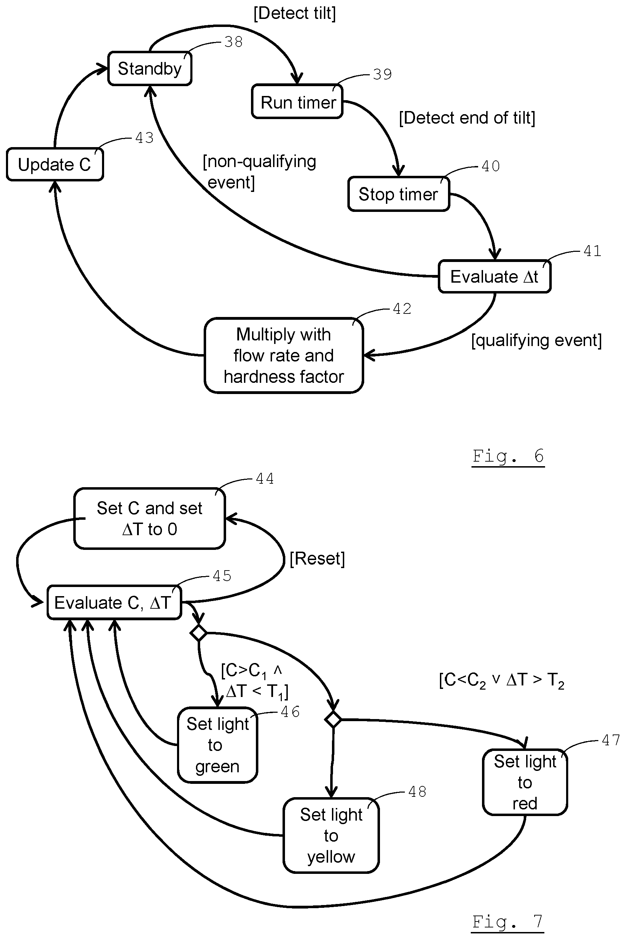

The operation of the LTI devices 22,34 will be explained with reference to the general monitoring system 1 and state diagrams (Figs. 6 and 7). It will be understood that the LTI devices 22,34 are arranged to implement the functionality of the local device 2.

When at rest, the local device 2 is in a standby mode (state 38). When the signal from the sensor 5 changes level to indicate the start of a flow event, the local device 2 transitions to a state 39 in which a timer is run. As explained, where the sensor 5 comprises a tilt sensor or tilt switch, this change of state is triggered by the sensor detecting a tilting movement past a certain threshold angle. Of course, some liquid may already have flowed before the threshold angle has been reached. The threshold angle will generally be small enough that that amount of liquid is negligible, but not so small that vibrations or, in the case of the second liquid treatment system 27, a sloping support surface for the jug 28, already triggers the state transition.

When the signal changes level to indicate the end of a flow event, the timer is stopped (state 40) and a duration *Δt* of the flow event is determined. Optionally, the local device 2 evaluates the duration *Δt* to determine whether the flow event as detected is a qualifying flow event or not (state 41). In an embodiment, qualifying flow events are flow events associated with a duration *Δt* above a pre-determined minimum. This results in flow events that do not correspond to the filling of a vessel, but rather to accidents, vibrations or the like, being disregarded. In another embodiment, qualifying flow events are flow events associated with a duration *Δt* below a pre-determined maximum. This results on the one hand in accidents or false detections of flow events being disregarded. Examples include the jug 28 being positioned on a sloping support surface or being knocked over. In the case of the first liquid treatment system 14, a user may leave the tap 15 running or have connected an appliance hose to the tap 15, e.g. to fill up a heating system or run a dishwasher. The empirical relation illustrated in Fig. 5 may not extend to such long durations. In an embodiment, qualifying events are only flow events associated with a duration *Δt* between the pre-determined minimum and the pre-determined maximum.

As part of the actions taken in one of the states 40,41 just discussed, the local device 2 stores the duration in a table in association with an identifier of the flow event. In one embodiment, the local device 2 stores the duration in the table only upon determining that the flow event is a qualifying flow event In another embodiment, the durations *Δt* of all flow events are stored. Sorting out durations associated with non-qualifying flow events is then left to the mobile computing device 3.

The table may be stored in the volatile memory unit 7 or the non-volatile memory unit 8. One of these memory units 7,8 is also arranged to store certain parameters. These include an average flow rate *Φ_{avg}* and a hardness factor *H* corresponding to a concentration of components removable by the liquid treatment medium in the first or second liquid treatment system 14,27. If the liquid treatment medium is for removing organic contaminants, then the factor will be a different conversion factor. The factor need not have a particular physical value. The factor need merely be suitable for differentiating quantitatively between concentration levels in the liquid to be treated.

The local device 2 is also arranged to store a value representative of a volume-dependent remaining treatment capacity *C*.

If the latest flow event is a non-qualifying flow event, the local device 2 returns to the standby state 38. If the flow event is a qualifying flow event, the local device 2 multiplies the duration by the average flow rate *Φ_{avg}* and the value of the hardness factor *H* stored in the local device 2 (state 42). The result is subtracted from the current value of the remaining treatment capacity *C* and the new value is stored (state 43), whereupon the local device returns to the standby state 38.

In an alternative embodiment, the local device 2 is arranged to store a current value of a variable corresponding to the used capacity, instead of the value representative of the remaining treatment capacity *C*. In that case, the actions undertaken in the last state 43 involve an addition instead of a subtraction operation. In either case, the combination of the mathematical operations carried out in the two states 42,43, when carried out repeatedly, is a linear combination of volume values obtained by multiplying the duration *Δt* with the average flow rate *Φ_{avg}.*

In the illustrated embodiment, the local device 2 also provides an output based on the current value of the remaining treatment capacity *C*. In another embodiment, this may alternatively or additionally involve the mobile computing device 3 and/or the central computer system 4.

In the illustrated embodiment (Fig. 7), one of the further parameters that the local device 2 stores in one of the memory units 7,8 is an initial treatment capacity *C₀.* Whenever the liquid treatment medium is replaced, this is detected, e.g. because a user provides an input via the user control 9. The local device 2 moves to an initialisation state 44, in which the remaining treatment capacity *C* is set to the initial treatment capacity *C₀* and a further timer is set to zero. The further timer is optional and runs independently of whether the liquid treatment system 14,27 is used to treat liquid. The further timer tracks an absolute time period *ΔT* corresponding to the time elapsed since the further timer was reset.

The local device 2 is normally in a state 45 in which the remaining treatment capacity *C* and the absolute time period *ΔT* are tracked. If the remaining treatment capacity *C* is higher than a first threshold value *C₁* and the absolute time period *ΔT* is below a first threshold time period *T₁,* the output of the output device 10 is green light (state 46). If either the remaining treatment capacity *C* is below a second threshold value *C₂* or the absolute time period *ΔT* is longer than a second threshold time period *T₂*, the output of the output device 10 is red light (state 47). This indicates a need to replace the liquid treatment medium, either because the treatment capacity has been exhausted or the risk of microbiological contamination has increased to a level that is too high. In all other cases, the output of the output device 10 is set to yellow light (state 48).

Tracking of the absolute time period *ΔT* may be dispensed with in cases in which the liquid being treated is not a potable liquid or not intended for human consumption, or where the nature of the treatment means that the risk of microbiological contamination is negligible.

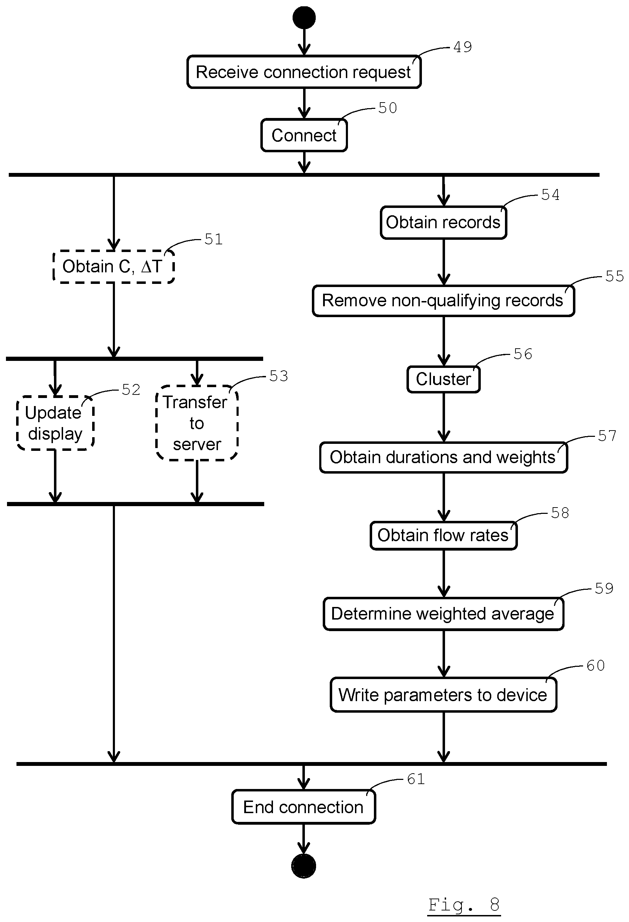

The mobile computing device 3 is configured to carry out a method (Fig. 8) of adjusting the determination of the volume of liquid that has passed through at least the treatment section of one of the liquid treatment systems 14,27. To this end, the mobile computing device 3 reads the records of at least the qualifying flow events and updates at least the average flow rate value *Φ_{avg}.* The user can, in an embodiment, also use the mobile computing device 3 to set at least one of the value of the initial treatment capacity *C₀* and the value of the hardness factor *H*, e.g. by inputting a type identifier of one of the liquid treatment cartridges 18,31 and the result of a hardness measurement carried out using e.g. a test strip. In another embodiment, the user inputs a geographical identifier, e.g. a post code, and the mobile computing device 3 determines the value of the hardness factor *H* with the help of a database maintained or downloaded from the central computer system 4.

In the embodiments discussed above, the wireless network 12 is set up on an ad hoc basis upon receipt of a user command by the local device 2 via the user control 9. The local device 2 then sends a request for setting up a network connection. Thus, in a first step 49, the mobile computing device 3 receives a connection request.

The mobile computing device 3 then connects (step 50) to the local device 2 via the wireless network 12.

Optionally, the mobile computing device 3 obtains (step 51) at least the current values of the remaining treatment capacity *C* and the absolute time period *ΔT.* In one embodiment, the mobile computing device 3 also implements a lifetime indicator, so that the obtained values are used (step 52) to update a display. The information displayed may be more detailed than the information displayable on the output device 10, for example. Alternatively or additionally, the information displayed may also be in accordance with a traffic-light scheme of the type described above.

Alternatively or additionally, the mobile computing device 3 forwards (step 53) the obtained information to the central computer system 4. The central computer system 4 may, for example, comprise a server or server system with a front-end allowing a user or a manufacturer of the replaceable liquid treatment cartridges 18,31 to retrieve the information or information based thereon.

Both these steps 52,53 are optional.

To update the value of the average flow rate value *Φ_{avg},* the mobile computing device 3 obtains (step 54) the records including date representative of the respective durations of at least qualifying flow events as recorded by the local device 2. If the local device 2 is arranged to record both qualifying and non-qualifying flow events, the mobile computing device 3 removes (step 55) the records associated with non-qualifying flow events.

The result is a set of values corresponding to durations *Δt* of qualifying flow events. Next, in the illustrated embodiment, the mobile computing device 3 performs a cluster analysis (step 56) on this set of values. The result is a smaller set of durations, each associated with a respective value representative of the number of durations in the cluster. The latter values can be considered weights. Thus, there may be a first duration with an associated weight and a second duration with an associated weight. The first duration may be small with a large weight, e.g. representing the frequent filling of a cup. The second duration may be larger with a smaller weight, e.g. representing the infrequent filling of a kettle. The mobile computing device 3 obtains (step 57) this set of flow rate values and associated weights. In an alternative embodiment, the central computer system 4 performs the step 56 of performing the cluster analysis.

Using a relation *Φ(Δt)* stored in memory in the form of a formula, formula parameters or a look-up table, the mobile computing device obtains (step 58) a flow rate value for each duration associated with one of the clusters. The cluster weights are then used to form (step 59) a weighted average *Φ_{avg}* of the individual flow rate values obtained in the preceding step 58. Then, the parameters including the weighted average *Φ_{avg}* are written (step 60) to the local device 2 for use in the totalisation operation that the local device 2 is arranged to carry out and that has been explained above with reference to Figs. 6 and 7.

The connection is then terminated (step 61).

The local device 2 is thus relieved of the need to carry out the calculations or store a look-up table.

The invention is not limited to the embodiments described above, which may be varied within the scope of the accompanying claims.

For example, the local device 2 may be arranged to store a single variable value that is the product of the average flow rate value *Φ_{avg}* and the hardness factor *H*. In that case, the mobile computing device 3 makes available this derived variable value instead of the average flow rate value *Φ_{avg}.*

The hardness factor *H* has been used as an example of a variable representative of a concentration of at least one component determining the composition of the liquid. In applications in which an aqueous liquid is treated, the variable may be representative of only the carbonate (temporary) hardness, the total dissolved solids (TDS) or the chlorine concentration, for example.

In the illustrated embodiment, the totalisation operation is carried out by the local device 2. In an alternative embodiment, only the mobile computing device 3 and/or the central computer system 4 carry out the totalisation operation. In that case, it suffices for the mobile computing device 3 to obtain the durations of the (qualifying) flow events, determine a respective volume (instead of a flow rate) for each of them. Deriving at least one value of a variable from the determined values of the parameter then involves no computation. The derived values correspond to the parameter values and these are made available as input to a totalisation operation carried out by the mobile computing device 3 and/or the central computer system 4.

It is conceivable that the local device 2 or the central computer system 4 carries out the steps described above as being carried out by the mobile computing device 3. However, for the local device 2 to do so would require more computational resources in the local device 2 for an adjustment that need be carried out only infrequently. For the central computer system 4 to do so would require steps to identify the correct local device 2 to the central computer system 4 and means to keep open the connection via the two networks 12,13.

Although the method of Fig. 8 has been described as being carried out automatically upon establishing connection, the renewed calculation of the weighted average *Φ_{avg},* i.e. the derived variable value(s) may be carried out only upon receipt of a command to do so by a user. The result may first be output to a user and the making available of this value to the local device 2 may be made subject to receipt of a confirmation command from the user.

It is also possible for the mobile computing device 3 to select the set of respective durations of flow events from a larger set based on at least one criterion associated with the flow events. In particular, the records received (step 54) may be associated with a respective timestamp representing e.g. a time and/or date. Selection may be of the durations of only those flow events associated with a time and/or date within a certain time period. Thus, only the most recent flow events may be taken into account, for example. It is also possible to obtain the absolute time period *ΔT* and select only those flow events that are associated with a timestamp falling within that time period. Thus, older records are no longer taken into account. In another embodiment, the re-set step 44 triggers execution of the method.

### List of reference numerals

- 1 -: monitoring system
- 2 -: local device
- 3 -: mobile computing device
- 4 -: central computer system
- 5 -: sensor
- 6 -: data processing unit
- 7 -: volatile memory unit
- 8 -: non-volatile memory unit
- 9 -: user control
- 10 -: output device
- 11 -: network interface
- 12 -: wireless network
- 13 -: Wide Area Network (WAN)
- 14 -: first liquid treatment system
- 15 -: tap
- 16 -: first conduit
- 17 -: head device
- 18 -: liquid treatment cartridge
- 19 -: second conduit
- 20 -: spout
- 21 -: lever
- 22 -: LTI device
- 23 -: printed circuit board
- 24 -: support frame
- 25 -: housing
- 26 -: window
- 27 -: second liquid treatment system
- 28 -: jug
- 29 -: spout
- 30 -: funnel
- 31 -: liquid treatment cartridge
- 32 -: lid
- 33 -: closure element
- 34 -: LTI device
- 35 -: light-emitting module
- 36 -: window
- 37 -: mobile computing device
- 38 -: state (standby)
- 39 -: state (run timer)
- 40 -: state (stop timer)
- 41 -: state (evaluate *Δt*)
- 42 -: state (multiply with flow rate and hardness factor)
- 43 -: state (update *C*)
- 44 -: state (obtain C and set *ΔT* to 0)
- 45 -: state (evaluate *C, ΔT*)
- 46 -: state (set light to green)
- 47 -: state (set light to red)
- 48 -: state (set light to yellow)
- 49 -: step (receive connection request)
- 50 -: step (connect)
- 51 -: step (obtain *C, ΔT*)
- 52 -: step (update display)
- 53 -: step (transfer to server)
- 54 -: step (obtain records)
- 55 -: step (remove non-qualifying records)
- 56 -: step (cluster)
- 57 -: step (obtain durations and weights)
- 58 -: step (obtain flow rates)
- 59 -: step (determine weighted average)
- 60 -: step (write parameters to device)
- 61 -: step (end connection)

## Claims

1. Method of adjusting a determination of a value of a measure based on a volume of liquid passed through a device (15;28) for handling a liquid, comprising:
obtaining a set of respective durations *(Δt*) of flow events from a measurement system (2;22;34) comprising a sensor (5) arranged to distinguish between a state of liquid flowing through a flow-conducting part (20;29) of the liquid handling device (15;28) and a state of non-flow, each flow event lasting from a detected transition from a state of non-flow to a state of flow until a detected transition from the state of flow back to a state of non-flow,
wherein the measurement system (2;22;34) is arranged to determine the durations (Δ*t*) of at least qualifying flow events on the basis of a signal from the sensor (5);
**characterized by**
determining respective values of a parameter (*Φ*) for at least two duration values derived from the set of durations (Δ*t)* using a non-linear relation (*Φ(Δt)*) between the parameter (*Φ*) and the duration of a flow event;
deriving at least one value of a variable (*Φ_{avg}*) from the determined values of the parameter; and
making available the derived variable value(s) (*Φ_{avg}*) as input to a totalisation operation comprising;
(i) determining a respective value of a volume-based measure for each of a sequence of at least qualifying flow events, wherein each determination is based on at least one of the derived variable value(s) made available as input;
(ii) determining a total value (*C*) that is a linear combination of the determined values of the volume-based measure; and
(iii) providing an output based on the total value (*C*).

2. Method according to claim 1,
wherein a single derived variable value (*Φ_{avg})* is made available as input, and
wherein the totalisation operation comprises:
(i) obtaining respective durations (*Δt*) of the sequence of flow events; and
(ii) determining the respective values of the volume-based measure by multiplying the duration *(Δt*) of the flow event concerned with the derived value (*Φ_{avg}*) made available as input.

3. Method according to claim 2,
wherein deriving the variable value (*Φ_{avg}*) comprises determining an average of the determined parameter values, e.g. a weighted average.

4. Method according to any one of the preceding claims,
wherein the at least two duration values derived from the set are obtained by performing a cluster analysis on the set of durations (Δ*t*)*.*

5. Method according to claim 3 and 4,
wherein the average is a weighted average, and
wherein weights for determining the weighted average are based on how many durations *(Δt)* are in the clusters.

6. Method according to any one of the preceding claims,
wherein the set of respective durations *(Δt*) is obtained from a device (2;22;34) comprising the measuring system via a communications network (12), e.g. a Personal Area Network.

7. Method according to any one of the preceding claims,
wherein making available the derived variable value(s) (*Φ_{avg}*) comprises transferring data representative of the derived variable value(s) (*Φ_{avg}*) over a communication network (12,13), e.g. a Personal Area Network, to a computer system (2,4;22;34) arranged to perform the totalisation operation.

8. Method according to claim 6 and 7,
wherein the device (2;22;34) comprising the measuring system also comprises the computer system arranged to perform the totalisation operation.

9. Method according to any one of the preceding claims,
further comprising performing the totalisation operation.

10. Method according to claim 9,
for use with a device (15;28) for handling a liquid comprised in a liquid treatment system for altering a composition of liquid,
wherein the liquid treatment system comprises a liquid treatment medium having a finite treatment capacity, and
wherein determining a total value (*C*) that is a linear combination of the determined values of the volume-based measure comprises multiplying the determined values of the volume-based measure with a value of a variable (*H*) representative of a concentration of at least one component determining the composition of the liquid.

11. System for effecting an adjustment of a determination of a measure based on a volume of liquid passed through a device (15;28) for handling a liquid,
comprising:
at least an interface to a measurement system (2;22;34) comprising a sensor (5) arranged to distinguish between a state of liquid flowing through a flow-conducting part (20;29) of the liquid handling device (15;28) and a state of non-flow,
wherein the measurement system (2;22;34) is arranged to determine the duration of at least qualifying flow events on the basis of a signal from the sensor (5); and
**characterized by**
a data processing system (3;37) configured to carry out a method according to any one of the preceding claims.

12. System according to claim 11,
wherein the interface comprises a network interface for communicating with a device (2;22;34) comprising at least the measurement system over a communications network (12), e.g. a Personal Area Network.

13. System according to claim 11 or 12,
comprising a network interface for communicating over a communications network (12,13) the derived variable value(s) to a computing system (2;22;34) arranged to perform the totalisation operation.

14. Liquid processing system comprising:
a measurement system (2;22;34) comprising a sensor (5) arranged to distinguish between a state of liquid flowing through a conduit of the liquid processing device and a state of non-flow,
wherein the measurement system (2;22;34) is arranged to determine the duration of at least a qualifying flow event on the basis of a signal from the sensor (5); and
a system (3;37) according to any one of claims 11-13.

15. Computer program including a set of instructions capable, when incorporated in a machine-readable medium, of causing a system (3;37) according to any one of claims 11-13 to carry out a method according to any one of claims 1-10.

## Patentansprüche

1. Verfahren zum Anpassen einer Bestimmung eines Wertes einer Messgröße basierend auf einem durch eine Vorrichtung (15;28) zur Handhabung einer Flüssigkeit geleiteten Flüssigkeitsvolumen, umfassend:
Erhalten eines Satzes jeweiliger Dauern (*Δt*) von Flussereignissen aus einem Messsystem (2;22;34), das einen Sensor (5) umfasst, der angeordnet ist, um zwischen einem Zustand von Flüssigkeit, die durch ein flussleitendes Teil (20;29) der Flüssigkeitshandhabungsvorrichtung (15;28) fließt, und einem Nicht-Flusszustand zu unterscheiden, wobei jedes Flussereignis von einem erkannten Übergang von einem Nicht-Flusszustand in einen Flusszustand bis zu einem erkannten Übergang vom Flusszustand zurück in einen Nicht-Flusszustand dauert,
wobei das Messsystem (2;22;34) angeordnet ist, um die Dauern (*Δt*) von mindestens qualifizierenden Flussereignissen auf der Basis eines Signals vom Sensor (5) zu bestimmen;
**gekennzeichnet durch**
Bestimmen jeweiliger Werte eines Parameters (*Φ*) für mindestens zwei Dauerwerte, die aus dem Satz von Dauern (*Δt*) abgeleitet werden, unter Verwendung einer nichtlinearen Beziehung (*Φ*(*Δt*)) zwischen dem Parameter (*Φ*) und der Dauer eines Flussereignisses;
Ableiten mindestens eines Wertes einer Variablen (*Φ_{avg}*) aus den bestimmten Werten des Parameters; und
Verfügbarmachen des/der abgeleiteten Variablenwerte(s) (*Φ_{avg}*) als Eingabe für eine Totalisierungsoperation, die umfasst:
(i) Bestimmen eines jeweiligen Wertes einer volumenbasierten Messung für jedes einer Folge von mindestens qualifizierenden Flussereignissen, wobei jede Bestimmung auf mindestens einem des/der als Eingabe verfügbar gemachten abgeleiteten Variablenwert(e)s basiert;
(ii) Bestimmen eines Gesamtwertes (C), der eine lineare Kombination der bestimmten Werte der volumenbasierten Messung ist; und
(iii) Bereitstellen einer Ausgabe basierend auf dem Gesamtwert (C).

2. Verfahren nach Anspruch 1,
wobei ein einzelner abgeleiteter Variablenwert (*Φ_{avg}*) als Eingabe verfügbar gemacht wird und
wobei die Totalisierungsoprtation umfasst:
(i) Erhalten jeweiliger Dauern (*Δt*) der Folge von Flussereignissen; und
(ii) Bestimmen der jeweiligen Werte der volumenbasierten Messung durch Multiplizieren der Dauer (*Δt*) des betreffenden Flussereignisses mit dem als Eingabe verfügbar gemachten abgeleiteten Wert (*Φ_{avg}*)*.*

3. Verfahren nach Anspruch 2,
wobei Ableiten des Variablenwertes (*Φ_{avg}*) Bestimmen eines Durchschnitts der bestimmten Parameterwerte, z. B. eines gewichteten Durchschnitts umfasst.

4. Verfahren nach einem der vorstehenden Ansprüche,
wobei die mindestens zwei aus dem Satz abgeleiteten Dauerwerte durch Durchführen einer Clusteranalyse des Satzes von Dauern (*Δt*) erhalten werden.

5. Verfahren nach Anspruch 3 und 4,
wobei der Durchschnitt ein gewichteter Durchschnitt ist und
wobei Gewichtungen zum Bestimmen des gewichteten Durchschnitts darauf basieren, wie viele Dauern (*Δt*) in den Clustern vorhanden sind.

6. Verfahren nach einem der vorstehenden Ansprüche,
wobei die jeweiligen Dauern (*Δt*) von einer Vorrichtung (2;22;34), die das Messsystem umfasst, über ein Kommunikationsnetzwerk (12), z. B. ein Personal Area Network erhalten werden.

7. Verfahren nach einem der vorstehenden Ansprüche,
wobei Verfügbarmachen des/der abgeleiteten Variablenwerte(s) (*Φ_{avg}*) Übertragen von Daten, die repräsentativ für den/die abgeleiteten variablen Wert(e) (*Φ_{avg}*) sind, über ein Kommunikationsnetzwerk (12,13), z. B. ein Personal Area Network, an ein Computersystem (2,4;22;34) umfasst, das angeordnet ist, um die Totalisierungsoperation durchzuführen.

8. Verfahren nach Anspruch 6 und 7,
wobei die Vorrichtung (2;22;34), die das Messsystem umfasst auch das Computersystem umfasst, das angeordnet ist, um die Totalisierungsoperation durchzuführen.

9. Verfahren nach einem der vorstehenden Ansprüche,
das weiter Durchführen der Totalisierungsoperation umfasst.

10. Verfahren nach Anspruch 9
zur Verwendung mit einer Vorrichtung (15;28) zur Handhabung einer Flüssigkeit die in einem Flüssigkeitsbehandlungssystem zur Veränderung einer Flüssigkeitszusammensetzung umfasst ist,
wobei das Flüssigkeitsbehandlungssystem ein Flüssigkeitsbehandlungsmedium umfasst, das eine begrenzte Behandlungskapazität aufweist, und
wobei Bestimmen eines Gesamtwertes (C), der eine lineare Kombination der bestimmten Werte der volumenbasierten Messung ist, Multiplizieren der bestimmten Werte der volumenbasierten Messung mit einem Wert einer Variablen (H) umfasst, die repräsentativ für eine Konzentration mindestens einer Komponente ist, welche die Zusammensetzung der Flüssigkeit bestimmt.

11. System zum Bewirken einer Anpassung einer Bestimmung einer Messgröße basierend auf einem durch eine Vorrichtung (15;28) zur Handhabung einer Flüssigkeit geleiteten Flüssigkeitsvolumen,
umfassend:
mindestens eine Schnittstelle zu einem Messsystem (2;22;34), das einen Sensor (5) umfasst, der angeordnet ist, um zwischen einem Zustand von Flüssigkeit, die durch ein flussleitendes Teil (20;29) der Flüssigkeitshandhabungsvorrichtung (15;28) fließt, und einem Nicht-Flusszustand zu unterscheiden,
wobei das Messsystem (2;22;34) angeordnet ist, um die Dauer von mindestens qualifizierenden Flussereignissen auf der Basis eines Signals vom Sensor (5) zu bestimmen; und
**gekennzeichnet durch**
ein Datenverarbeitungssystem (3;37), das konfiguriert ist, um ein Verfahren nach einem der vorstehenden Ansprüche auszuführen.

12. System nach Anspruch 11,
wobei die Schnittstelle eine Netzwerkschnittstelle zum Kommunizieren mit einer Vorrichtung (2;22;34), die mindestens das Messsystem umfasst, über ein Kommunikationsnetzwerk (12), z. B. ein Personal Area Network umfasst.

13. System nach Anspruch 11 oder 12,
umfassend eine Netzwerkschnittstelle zum Kommunizieren über ein Kommunikationsnetzwerk (12,13) des/der abgeleiteten Variablenwert(e)s an ein Computersystem (2;22;34), das angeordnet ist, um die Totalisierungsoperation durchzuführen.

14. Flüssigkeitsverarbeitungssystem, umfassend:
ein Messsystem (2;22;34), das einen Sensor (5) umfasst, der angeordnet ist, um zwischen einem Zustand von Flüssigkeit, die durch eine Leitung der Flüssigkeitshandhabungsvorrichtung fließt, und einem Nicht-Flusszustand zu unterscheiden,
wobei das Messsystem (2;22;34) angeordnet ist, um die Dauer von mindestens einem qualifizierenden Flussereignis auf der Basis eines Signals vom Sensor (5) zu bestimmen; und
ein System (3;37) nach einem der Ansprüche 11-13.

15. Computerprogramm, das einen Satz von Anweisungen beinhaltet, die, wenn sie in ein maschinenlesbares Medium integriert sind, ein System (3;37) nach einem der Ansprüche 11-13 veranlassen, ein Verfahren nach einem der Ansprüche 1-10 auszuführen.

## Revendications

1. Procédé d'ajustement d'une détermination d'une valeur d'une mesure basée sur un volume de liquide traversant un dispositif (15 ; 28) pour la manipulation d'un liquide, comprenant :
l'obtention d'un ensemble de durées respectives (Δ*f*) d'événements d'écoulement à partir d'un système de mesure (2 ; 22 ; 34) comprenant un capteur (5) conçu pour faire la distinction entre un état d'écoulement de liquide à travers une partie conductrice d'écoulement (20 ; 29) du dispositif de manipulation de liquide (15 ; 28) et un état de non-écoulement, chaque événement d'écoulement allant d'une transition détectée d'un état de non-écoulement à un état d'écoulement jusqu'à une transition détectée de l'état d'écoulement revenant à un état de non-écoulement,
dans lequel le système de mesure (2 ; 22 ; 34) est conçu pour déterminer les durées (*Δt*) d'au moins des événements d'écoulement admissibles sur la base d'un signal provenant du capteur (5) ;
**caractérisé par**
la détermination de valeurs respectives d'un paramètre (*Φ*) pour au moins deux valeurs de durée déduites de l'ensemble de durées (*Δt*) en utilisant une relation non linéaire (*Φ*(*Δt*)) entre le paramètre (*Φ*) et la durée d'un événement d'écoulement ;
la déduction d'au moins une valeur d'une variable (*Φ_{avg}*) à partir des valeurs déterminées du paramètre ; et
la mise à disposition de la ou des valeurs de variables déduites (*Φ_{avg}*) en entrée d'une opération de totalisation comprenant :
(i) la détermination d'une valeur respective d'une mesure basée sur le volume pour chacun d'une séquence d'au moins des événements d'écoulement admissibles, dans lequel chaque détermination est basée sur au moins une de la ou des valeurs de variables déduites mises à disposition en entrée ;
(ii) la détermination d'une valeur totale (C) qui est une combinaison linéaire des valeurs déterminées de la mesure basée sur le volume ; et
(iii) la fourniture d'une sortie basée sur la valeur totale (C).

2. Procédé selon la revendication 1,
dans lequel une seule valeur de variable déduite (*Φ_{avg}*) est mise à disposition en entrée, et
dans lequel l'opération de totalisation comprend :
(i) l'obtention de durées respectives (*Δt*) de la séquence d'événements d'écoulement; et
(ii) la détermination des valeurs respectives de la mesure basée sur le volume en multipliant la durée (*Δt*) de l'événement d'écoulement concerné par la valeur déduite (*Φ_{avg}*) mise à disposition en entrée.

3. Procédé selon la revendication 2,
dans lequel la déduction de la valeur variable (*Φ_{avg}*) comprend la détermination d'une moyenne des valeurs de paramètres déterminées, par exemple une moyenne pondérée.

4. Procédé selon l'une quelconque des revendications précédentes,
dans lequel les au moins deux valeurs de durée déduites de l'ensemble sont obtenues en effectuant une analyse par regroupements sur l'ensemble des durées (*Δt*)*.*

5. Procédé selon les revendications 3 et 4,
dans lequel la moyenne est une moyenne pondérée, et
dans lequel les poids pour déterminer la moyenne pondérée sont basés sur le nombre de durées (*Δt*) présentes dans les regroupements.

6. Procédé selon l'une quelconque des revendications précédentes,
dans lequel l'ensemble de durées respectives (*Δt*) est obtenu à partir d'un dispositif (2 ; 22 ; 34) comprenant le système de mesure via un réseau de communication (12), par exemple un réseau personnel.

7. Procédé selon l'une quelconque des revendications précédentes,
dans lequel la mise à disposition de la ou des valeurs de variables déduites (*Φ_{avg}*) comprend le transfert de données représentatives de la ou des valeurs de variables déduites (*Φ_{avg}*) sur un réseau de communication (12, 13), par exemple un réseau personnel, vers un système informatique (2,4 ; 22 ; 34) conçu pour effectuer l'opération de totalisation.

8. Procédé selon les revendications 6 et 7,
dans lequel le dispositif (2 ; 22 ; 34) comprenant le système de mesure comprend également le système informatique conçu pour réaliser l'opération de totalisation.

9. Procédé selon l'une quelconque des revendications précédentes,
comprenant en outre la réalisation de l'opération de totalisation.

10. Procédé selon la revendication 9,
à utiliser avec un dispositif (15 ; 28) pour manipuler un liquide compris dans un système de traitement de liquide pour modifier une composition de liquide,
dans lequel le système de traitement de liquide comprend un milieu de traitement de liquide présentant une capacité de traitement finie, et
dans lequel la détermination d'une valeur totale (C) qui est une combinaison linéaire des valeurs déterminées de la mesure basée sur le volume comprend la multiplication des valeurs déterminées de la mesure basée sur le volume par une valeur d'une variable (*H*) représentative d'une concentration d'au moins un composant déterminant la composition du liquide.

11. Système permettant d'effectuer un ajustement d'une détermination d'une mesure sur la base d'un volume de liquide traversant un dispositif (15 ; 28) pour manipuler un liquide,
comprenant :
au moins une interface avec un système de mesure (2 ; 22 ; 34) comprenant un capteur (5) conçu pour faire la distinction entre un état d'écoulement de liquide à travers une partie conductrice d'écoulement (20 ; 29) du dispositif de manipulation de liquide (15 ; 28) et un état de non-écoulement,
dans lequel le système de mesure (2 ; 22 ; 34) est conçu pour déterminer la durée d'au moins des événements d'écoulement admissibles sur la base d'un signal provenant du capteur (5) ; et
**caractérisé par**
un système de traitement de données (3 ; 37) configuré pour mettre en œuvre un procédé selon l'une quelconque des revendications précédentes.

12. Système selon la revendication 11,
dans lequel l'interface comprend une interface réseau pour communiquer avec un dispositif (2 ; 22 ; 34) comprenant au moins le système de mesure sur un réseau de communication (12), par exemple un réseau personnel.

13. Système selon la revendication 11 ou 12,
comprenant une interface réseau pour communiquer via un réseau de communication (12, 13) la ou les valeurs de variables déduites à un système informatique (2 ; 22 ; 34) conçu pour réaliser l'opération de totalisation.

14. Système de traitement de liquide, comprenant :
un système de mesure (2 ; 22 ; 34) comprenant un capteur (5) conçu pour faire la distinction entre un état d'écoulement de liquide traversant un conduit du dispositif de traitement de liquide et un état de non-écoulement,
dans lequel le système de mesure (2 ; 22 ; 34) est conçu pour déterminer la durée d'au moins un événement d'écoulement admissible sur la base d'un signal provenant du capteur (5) ; et
un système (3 ; 37) selon l'une quelconque des revendications 11-13.

15. Programme informatique incluant un ensemble d'instructions aptes, lorsqu'elles sont incorporées dans un support lisible par machine, à amener un système (3 ; 37) selon l'une quelconque des revendications 11-13 à mettre en œuvre un procédé selon l'une quelconque des revendications 1-10.
